# EUROPÄISCHE PATENTSCHRIFT

(11) **EP 1 260 602 B1**
(45) Veröffentlichungstag und Bekanntmachung des Hinweises auf die Patenterteilung: **13.04.2016**
(21) Anmeldenummer: 02405095.7
(22) Anmeldetag: 11.02.2002
(51) Int. Cl.: C23C 4/12, C23C 4/02

(54) **Verfahren zum Erzeugen eines wärmedämmenden Schichtsystems auf einem metallischen Substrat**
Process for producing a thermally insulating coating system on a metallic substrate
Procédé de production d'un revêtement multicouche thermiquement isolant sur un substrat métallique

(30) Priorität: 23.05.2001 CH 9552001
(43) Veröffentlichungstag der Anmeldung: 27.11.2002
(73) Patentinhaber: Sulzer Metco AG, 5610 Wohlen (CH)
(72) Erfinder: Loch, Michel Dr.-Ing., 79664 Wehr (DE); Barbezat, Gérard, 8152 Opfikon (CH)
(74) Vertreter: Intellectual Property Services GmbH

(56) Entgegenhaltungen:
- EP-A- 0 223 104
- EP-A- 0 783 043
- EP-A- 0 845 547
- EP-A- 0 935 010
- EP-A- 0 985 745
- WO-A-89/07159
- WO-A-97/29219
- WO-A-99/55527
- DE-A- 4 114 962
- DE-A- 19 644 153
- DE-A- 19 741 961
- US-A- 4 321 311
- US-A- 5 302 465
- US-A- 6 057 011
- PATENT ABSTRACTS OF JAPAN vol. 018, no. 591 (C-1272), 11. November 1994 (1994-11-11) & JP 06 220603 A (MITSUBISHI HEAVY IND LTD), 9. August 1994 (1994-08-09)
- PATENT ABSTRACTS OF JAPAN vol. 012, no. 270 (C-515), 27. Juli 1988 (1988-07-27) & JP 63 049268 A (NIPPON KOKAN KK), 2. März 1988 (1988-03-02)
- PATENT ABSTRACTS OF JAPAN vol. 018, no. 351 (C-1220), 4. Juli 1994 (1994-07-04) & JP 06 088197 A (MITSUBISHI HEAVY IND LTD), 29. März 1994 (1994-03-29)

## Beschreibung

Die Erfindung betrifft:
- ein Verfahren zum Erzeugen eines wärmedämmenden Schichtsystems auf einem metallischen Substrat gemäss dem Oberbegriff des Anspruchs 1;
- eine Anwendung dieses Verfahrens gemäss den Ansprüchen 16 und 17; und
- die in den Ansprüchen 18 und 19 umschriebenen Bauteile.

Die grössten Fortschritte in der Verbesserung der Leistungsfähigkeit von Maschinen, wie sie z.B. Turbinen darstellen, werden mit einer Erhöhung der Prozesstemperatur erreicht. Dies führt dazu, dass die metallischen Komponenten der Baueile über die Grenzen ihrer Leistungsfähigkeit belastet werden und ohne Veränderung bzw. Schädigung ihren Einsatz nicht überstehen.

Es ist wohl bekannt, dass Beschichtungen eingesetzt werden, um die metallischen Bauteile vor diesen kritischen Belastungen zu schützen. So werden z. B. keramische Wärmedämmschichten eingesetzt, um die Wärmeleitung zwischen Prozessraum und Bauteil herabzusetzen, oder metallische Schichten um die Heissgaskorrosionsfestigkeit der metallischen Bauteile an ihrer Oberfläche zu erhöhen. Solche Schichten werden seit Jahren auch mittels thermischem Beschichten hergestellt; sie sind heute Stand der Technik.

Da in den wenigsten Fällen eine einzige Schicht ausreicht, um - insbesondere bei hoher Belastung - dem komplexen Belastungsangriff zu widerstehen, werden bevorzugt Schichtsysteme aus mehreren unterschiedlichen Schichten aufgebracht, von denen jede Schicht Eigenschaften besitzt, die sie gegenüber dem Belastungsangriff besonders auszeichnet. Ganz typisch ist das Aufbringen einer stabilisierten Zirkonoxidschicht als Wärmedämmschicht auf eine metallische Schicht, welche heissgaskorrosionsfest ist, z.B. eine MCrAlY-Schicht, wobei M. für ein Metall auf Co-, Ni- oder Fe-Basis steht. Diese Schicht wird bevorzugt direkt auf das zu schützende Bauteil aufgebracht.

Aufgrund der Anforderungen bezüglich Leistungsfähigkeit und Lebensdauer sind in der Vergangenheit weitere Schichten entwickelt worden, die zusätzlich zu dem 2-Schichtensystem "Stabilisiertes Zirkonoxid/MCrAIY" aufgebracht werden. Da es zwischen der MCrAlY-Schicht und dem Substrat bei hohen Temperaturen zur Diffusion von wichtigen Metallatomen kommt, verändert sich die Schicht negativ bis sie ihre Funktion nicht mehr erfüllen kann. Um dies zu verhindern wurde eine Zwischenschicht zwischen der MCrAlY-Schicht und dem Substrat entwickelt, welches entweder als Diffusionssperre oder als Lieferant wichtiger Metallatome dient (im folgenden als "Sperrschicht" bezeichnet. Eine weitere Zwischenschicht wird schon für den Bereich zwischen der MCrAlY-Schicht und der Wärmedämmschicht eingesetzt, welche den oxidativen Angriff auf die MCrAlY-Schicht mindert und eine Haftungsverbesserung zur Wärmedämmschicht bewirkt.

Aus der US-A-5 238 752 ist ein Wärmedämmschichtsystem mit einem intermetallischen Haftvermittlungsüberzug bekannt. Das Wärmedämmschichtsystem ist auf einem metallischen Grundkörper für eine Flugtriebwerksschaufel, insbesondere aus einer Cr-Co-Fe-Legierung, aufgebracht. Als weitere Werkstoffe für den Grundkörper sind Legierungen auf Co- und Ni-Basis genannt. Unmittelbar auf diesem Grundkörper ist eine intermetallische Haftvermittlungsschicht, insbesondere aus einem Ni-Aluminid oder einem Pt-Aluminid aufgebracht. An diese Haftvermittlungsschicht schließt sich eine dünne keramische Schicht aus Aluminiumoxid an, auf welche die eigentliche Wärmedämmschicht, insbesondere aus mit Yttriumoxid stabilisierten Zirkonoxid, aufgetragen ist. Die Wärmedämmschicht wird mittels eines EB-PVD-Verfahrens (Electron Beam Physical Vapor Deposition - Physikalische Dampfabscheidung mittels Elektronenstrahl) auf den Grundkörper abgeschieden, wobei mit einer Elektronenstrahlkanone aus einem metalloxidischen Körper Zirkon- und Yttriumoxide verdampft werden.

Weitere Verfahren und Beispiele zum Aufbringen eines Wärmedämmschichtsystems auf eine Gasturbinenschaufel sind aus der US-A-5 514 482 sowie der US-A-4 409 659 bekannt.

In den beiden US-A-4 321 310- und US-A-4 321 311-Schriften sind jeweils Wärmedämmschichtsysteme beschrieben, die eine Haftvermittlungsschicht aus einer Legierung des Typs MCrAlY zwischen der Zirkonoxid-Schicht und dem metallischen Grundkörper aufweisen. Als mögliches Verfahren zur Herstellung einer Wärmedämmschicht aus Zirkonoxid wird ein PVD-Verfahren (Physical Vapor Deposition - Physikalische Dampfabscheidung) genannt.

Aus der DE-A1-197 41 961 ist bekannt, dass es vorteilhaft ist, im Hinblick auf eine Lebensdauerverlängerung und Anhaftung der Wärmedämmschicht an den Grundkörper, eine chemische Anbindung der Wärmedämmschicht an die metallische Haftschicht herzustellen. Dies wird beispielsweise durch eine dünne Schicht aus Al₂O₃ erreicht. Als Vermittlerschicht eignet sich ebenfalls eine Schicht aus einer ternären Al-Zr-O-Verbindung. Die ternäre Al-Zr-O-Verbindung, z.B. Al₂Zr₂O₇ eignet sich vorzugsweise zur Anbindung einer Wärmedämmschicht, die Zirkonoxid aufweist.

Die Wärmedämmschicht umfasst vorzugsweise eine metallische Substanz, insbesondere Zirkonoxid. Dieses Metalloxid ist vorzugsweise zur Vermeidung einer Phasenumwandlung bei hohen Temperaturen mit einem Stabilisator, Yttriumoxid, legiert. Das Zirkonoxid wird vorzugsweise mit 3 bis 20 Gew.-%, insbesondere mit 8 Gew.-%, Yttriumoxid versetzt. Auch andere Seltenerden, wie z.B. Ceriumoxid oder Scandiumoxid, finden als Stabilisatoren für Zirkonoxid Verwendung.

Aus der Offenlegungsschrift DE-A1-41 14 962 ist ein Verfahren zur Herstellung von Multilayerschichten mittels Vakuumplasmaspritzen (VPS) bekannt, in welchem auf ein metallisches Substrat ein Schichtverbund aus einzelnen dünnen Lagen aufgespritzt wird, wobei die Lagen lokal unterschiedlich dick sind.

Die Veröffentlichung EP-A1-0 935 010 offenbart ein Wärmedämmschichtsystem, das aus einer Haftvermittlerschicht und aus einer Wärmedämmschicht besteht, welche aus zwei unterschiedlichen Bestandteilen aufgebaut ist.

Alle diese Schichten werden aus überwiegend kostenbedingten Gründen mit z.T. sehr unterschiedlichen Verfahren aufgebracht: die Sperrschichten z.B. galvanisch; die Heißgaskorrosionsschichten z.B. mitels LPPS (Low Pressure Plasma Spraying - Niederdruck-Plasmaspritzen) oder HVOF (Hight Velocity Oxygen Fuel - Hochgeschwindigkeits-Flammspritzen); die Schutzschicht z.B. mit PVD (Physical Vapour Deposition - Physikalische Dampfabscheidung); und die Wärmedämmschicht z.B. mit APS (Atmospheric Plasma Spraying - Plasmaspritzen unter Atmosphärendruck) oder EB-PVD (Electron Beam Physical Vapor Deposition - Physikalische Dampfabscheidung aus dem Elektronenstrahl) aufgebracht. Dies bedingt einen enormen Maschinenpark für die unterschiedlichen Technologien und teilweise hohen Kosten einzelner Verfahren. Als nachteilig erweisen sich z.B. bei dem EB-PVD-Verfahren (Electron Beam Physical Vapor Deposition - Physikalische Dampfabscheidung aus dem Elektronenstrahl) die extrem hohen Anlagenkosten für die Elektronenstrahlkanone, für die Erzeugung des Hochvakuums, für die Vakuumkammer und für die Partialdrucksteuerung. Des weiteren lassen sich die Kapazitäten der einzelnen Verfahren nicht beliebig auf alle Schichten ausdehnen. So lassen sich mit dem EB-PVD (Electron Beam Physical Vapor Deposition - Physikalische Dampfabscheidung mittels Elektronenstrahl) die nicht direkt sichtbaren Flächen des Bauteils während des Beschichtungszyklus nicht oder nur unzureichend beschichten. Je vielfältiger die Wahl der verschiedenen Schicht ausfällt, je komplexer wird die Vielfalt der Beschichtungstechnologien.

Aufgabe der Erfindung ist es nun, verschiedene Beschichtungsverfahren, welche zur Erzeugung der beschriebenen Schichtsysteme bisher notwendig waren, durch ein einziges Beschichtungsverfahren zu ersetzen.

Diese Aufgabe wird durch die im Kennzeichen des Anspruchs 1 genannten Massnahmen gelöst.

Im Folgenden wird das Niederdruckplasmaspritzverfahren (LPPS) unterteilt in das LPPS-Dickschichtverfahren (konventionelles LPPS) und das LPPS-Dünnfilmverfahren ("Neues" LPPS nach US-A-5 853 815).

Bisher war die durch die vorliegende Erfindung erreichte Prozessvereinfachung nicht möglich, da die Schichtdicken der verschiedenen Schichten sehr unterschiedlich ausgeführt wurden, typischerweise wenige Mikrometer für die Zwischenschichten und bis zu Millimetern für die Wärmedämmschichten. Die bisher eingesetzten Verfahren konnten bevorzugt entweder ausschliesslich dünn oder ausschliesslich dick beschichten, was sowohl technologische wie auch wirtschaftliche Gründe hatte. Aus der US-A-5 853 815 ist ein LPPS-Dünnfilmverfahren bekannt, welches sich grundsätzlich dazu eignet, ein wärmedämmendes Schichtsystem der genannten Art auf ein metallisches Substrat aufzubringen.

Bei diesem LPPS-Dünnfilmverfahren wird ein Plasmastrahl bei einem besonders niedrigen Druck erzeugt. Im Vergleich zu älteren LPPS-Dickschichtverfahren entsteht ein Plasmastrahl, der transversal beträchtlich aufgeweitet ist und auf einen Pulverstrahl, der mit Fördergas in das Plasma injiziert wird, defokussierend wirkt. Innerhalb einer Dauer, die für thermische Beschichtungsverfahren kurz ist, lässt sich eine grosse Fläche mit dem das Beschichtungsmaterial dispers führenden Plasmastrahl überstreichen. Es entstehen mit einem solchen LPPS-Dünnfilmverfahren, bei dem mit Plasmastrahlen von beispielsweise bis zu 2,5 m Länge gearbeitet wird, gleichmässige und sehr dünne Schichten.

Für die Ausbildung einer Beschichtung mit definierter Dichte muss die Beschichtung mit einer Vielzahl von Einzelaufträgen aufgebaut werden. Geeignetes Beschichtungsmaterial besteht aus Gemengen von Pulverpartikeln, für die der mittlere Partikeldurchmesser vorzugsweise kleiner 50 µm ist. Jedes Partikel, dessen Durchmesser nicht wesentlich grösser als der mittlere Durchmesser ist, wird im Plasmastrahl teilweise oder ganz aufgeschmolzen, so dass sich bei Auftreffen der heissen Partikel auf ein Substrat eine Schichtausbildung einstellen lässt, die eine definitive Dichte und Dicke hat. Die mikroskopische Struktur der aufgespritzten Schicht ist in ihrer Dichte bzw. Porosität durch Wahl der Spritz- und Pulverparameter einstellbar.

Der Einsatz des LPPS-Beschichtungsverfahrens für die Herstellung des gesamten Schichtpaketes eröffnet erstmals die Möglichkeit, dünne und dicke Schichten zu erzeugen, ohne dass wie bisher die Verfahren für die Schichtaufbringung gewechselt werden müssen.

Das Schichtsystem kann nach dem Aufbringen als Ganzes wärmebehandelt werden.

Die bevorzugten Parameter der in Frage kommenden Schichten sind in der nachstehenden Tabelle zusammengestellt.

**Tabelle**

| Schicht | Material | Schichtdicke |
|---|---|---|
| Sperrschicht | | 1 bis 20 µm, vorzugsweise von 8 bis 12 µm |
| | metallisch, insbesondere Metalllegierung, vorzugsweise NiAl- oder NiCr-Legierung | |
| Heissgaskorrosionsschutzschicht | | 50 bis 500 µm, vorzugsweise 100 bis 300 µm |
| | metallisch, insbesondere MCrAlY-Legierung (wobei M für Fe, Co oder Ni steht) oder Metallaluminid | |
| Schutzschicht | | 1 bis 20 µm, vorzugsweise 8 bis 10 µm |
| | Aluminiumoxid oder ternäre Al-Zr-O-Verbindung | |
| Wärmedämmschicht | | 100 bis 2000 µm, vorzugsweise 150 bis 500 µm |
| | oxidkeramische Substanz, insbesondere Zirkonoxid enthaltende Substanz, und Stabilisator, insbesondere Seltenerdenoxide, vorzugsweise Yttriumoxid oder Ceriumoxid | |
| Glättungsschicht | | 1 bis 50 µm, vorzugsweise 10 bis 30 µm |
| | oxidkeramische Substanz, insbesondere Zirkonoxid enthaltende Substanz, und Stabilisator, insbesondere Seltenerdenoxide, vorzugsweise Yttriumoxid oder Ceriumoxid | |

Im folgenden wird die Erfindung anhand von Ausführungsbeispielen unter Bezugnahme auf eine Zeichnung näher erläutert. Es zeigen:
- Fig. 1: eine schematische Schnittansicht durch ein gemäss dem nachstehenden Ausführungsbeispiel des erfindungsgemässen Verfahrens hergestellte Wärmedämmschicht; und
- Fig. 2: eine mikroskopische Aufnahme einer gemäss diesem Ausführungsbeispiel hergestellten Wärmedämmschicht, in der die verschiedenen Schichtstrukturen erkennbar sind.

### Beispiel 1

Beim vorliegenden Ausführungsbeispiel zur Herstellung des Wärmedämmschichtsystems mittels des erfindungsgemässen LPPS-Beschichtungsverfahrens wird zunächst eine Sperrschicht unter Dünnfilmbedingungen aufgebracht. Danach erfolgt das Abscheiden der Haftvermittlungs- und Heisskorrosionsschutzschicht bei Dickschichtbedingungen, danach das Beschichten mit der Schutzschicht unter Dünnfilmbedingungen, danach das Abscheiden der Wärmedämmschicht unter Dickschichtbedingungen, und schliesslich das Aufbringen der Glättungsschicht unter Dünnfilmbedingungen.

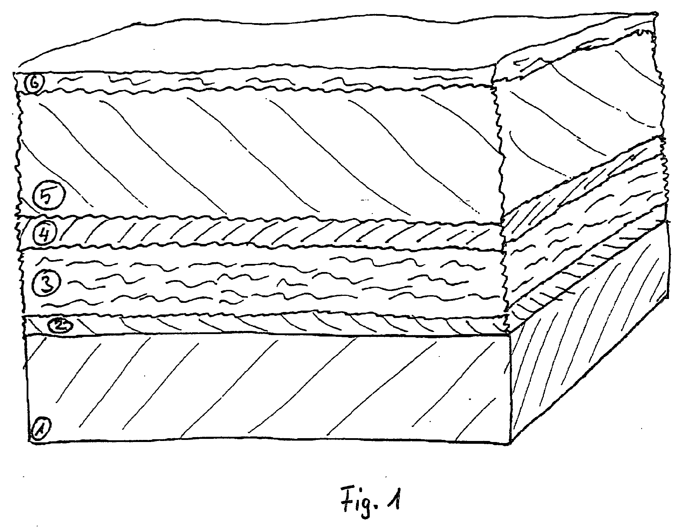

Die erhaltene Wärmedämmschicht weist die Struktur auf, wie sie aus Fig. 1 ersichtlich ist. In dieser bedeuten:
- 1: Das Substrat (z.B. Ni- oder Co-Legierung);
- 2: Metallische Sperrschicht (z.B. NiAl- oder NiCr-Legierung - 1 bis 20 µm);
- 3: Metallische Heissgaskorrosionsschutzschicht (z.B. MCrAlY-Legierung - 50 bis 500 µm);
- 4: Oxidkeramische Schutzschicht (z.B. Al₂O₃ - 1 bis 20 µm);
- 5: Oxidkeramische Wärmedämmschicht (z.B. ZrO₂-8%Y₂O₃ -100 bis 2000 µm);
- 6: Oxidkeramische Glättungsschicht (z.B. ZrO₂-8%Y₂O₃ - 1 bis 50 µm).

Es versteht sich, dass das gezeigte Ausführungsbeispiel keinesfalls als einschränkend zu betrachten ist, sondern dass mit den in den Patentansprüchen definierten Verfahren von obigem Beispiel abweichende Schichtsysteme aufgebracht werden können. Insbesondere erlaubt es die vorliegende Erfindung die Schicht in jeder beliebigen Reihenfolge aufzubringen.

### Beispiel 2

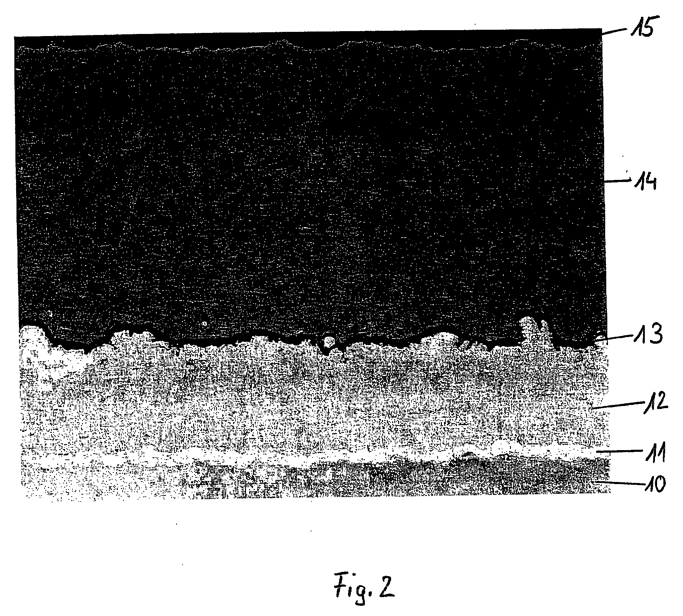

Nach dem im Beispiel 1 beschriebenen Verfahren wurde die in Fig. 2 dargestellte Schichtfolge mit folgenden Parametern hergestellt:

| | |
|---|---|
| 10 Substrat: | Superlegierung Inconel 718, 3mm |
| 11 Sperrschicht: | AMDRY (Ni 80%Cr), 13µm |
| 12 Heissgaskorrosionsschutzschicht: | AMDRY 9951 (Co 32%Ni 21%CR 8%AI 0.5%Y) 137µm |
| 13 Schutzschicht: | Metco 105 (99.5% Al₂O₃) 9µm |
| 14 Wärmedämmschicht: | Metco 204, ZrO₂-8%Y₂O₃, 360µm |
| 15 Glättungsschicht: | Metco 204, ZrO₂-8%Y₂O₃, 15µm |

## Patentansprüche

1. Verfahren zum Erzeugen eines wärmedämmenden Schichtsystems auf einem metallischen Substrat, welches Schichtsystem mindestens drei der folgenden Einzelschichten umfasst:
- Sperrschicht;
- Heissgaskorrosionsschutzschicht;
- Schutzschicht;
- Wärmedämmschicht; und
- Glättungsschicht,
**dadurch gekennzeichnet, dass** das Schichtsystem eine Wärmedämmschicht umfasst und durch Niederdruckplasmaspritzen in Form eines LPPS-Beschichtungsverfahrens in einem einzigen Arbeitszyklus aufgebracht wird.

2. Verfahren nach Anspruch 1, **dadurch gekennzeichnet, dass** das Schichtsystem in einem einzigen Arbeitszyklus ohne Unterbruch aufgebracht wird.

3. Verfahren nach Anspruch 1 oder 2, **dadurch gekennzeichnet, dass** das Schichtsystem nach dem Aufbringen als Ganzes wärmebehandelt wird.

4. Verfahren nach einem oder mehreren der vorhergehenden Ansprüche, **dadurch gekennzeichnet, dass** eine Sperrschicht mit einer Schichtdicke von 1 bis 20 µm, vorzugsweise von 8 bis 12 µm, aufgebracht wird.

5. Verfahren nach einem oder mehreren der vorhergehenden Ansprüche, **dadurch gekennzeichnet, dass** eine metallische Sperrschicht, insbesondere aus einer Metalllegierung, vorzugsweise aus einer NiAl- oder NiCr-Legierung, aufgebracht wird.

6. Verfahren nach einem oder mehreren der vorhergehenden Ansprüche, **dadurch gekennzeichnet, dass** eine Heissgaskorrosionsschutzschicht mit einer Schichtdicke von 50 bis 500 µm, vorzugsweise von 100 bis 300 µm, aufgebracht wird.

7. Verfahren nach einem oder mehreren der vorhergehenden Ansprüche, **dadurch gekennzeichnet, dass** eine metallische Heissgaskorrosionsschutzschicht, insbesondere aus einer MCrAlY-Legierung, wobei M für Fe, Co oder Ni steht, oder aus einem Metallaluminid, aufgebracht wird.

8. Verfahren nach einem oder mehreren der vorhergehenden Ansprüche, **dadurch gekennzeichnet, dass** eine Schutzschicht mit einer Schichtdicke von 1 bis 20 µm, vorzugsweise von 8 bis 12 µm, aufgebracht wird.

9. Verfahren nach einem oder mehreren der vorhergehenden Ansprüche, **dadurch gekennzeichnet, dass** eine Schutzschicht aufgebracht wird, welche aus einem Aluminiumoxid oder einer ternären Al-Zr-O-Verbindung besteht.

10. Verfahren nach einem oder mehreren der vorhergehenden Ansprüche, **dadurch gekennzeichnet, dass** eine Wärmedämmschicht mit einer Schichtdicke von 100 bis 2000 µm, vorzugsweise von 150 bis 500 µm, aufgebracht wird.

11. Verfahren nach einem oder mehreren der vorhergehenden Ansprüche, **dadurch gekennzeichnet, dass** eine Wärmedämmschicht, welche aus einer oxidkeramischen Substanz, insbesondere einer Zirkonoxid enthaltenden Substanz, und einem Stabilisator, insbesondere aus Oxiden der Seltenerden, vorzugsweise Yttriumoxid oder Ceriumoxid, besteht aufgebracht wird.

12. Verfahren nach einem oder mehreren der vorhergehenden Ansprüche, **dadurch gekennzeichnet, dass** eine Glättungsschicht mit einer Schichtdicke von 1 bis 50 µm, vorzugsweise von 10 bis 30 µm, aufgebracht wird.

13. Verfahren nach einem oder mehreren der vorhergehenden Ansprüche, **dadurch gekennzeichnet, dass** eine Glättungsschicht, welche aus einer oxidkeramischen Substanz, insbesondere einer Zirkonoxid enthaltenden Substanz, und einem Stabilisator, insbesondere aus Oxiden der Seltenerden, vorzugsweise Yttriumoxid oder Ceriumoxid, besteht, aufgebracht wird.

14. Verfahren nach einem oder mehreren der vorhergehenden Ansprüche, **dadurch gekennzeichnet, dass** das metallische Substrat mit Dreh- oder Schwenkbewegungen in der Partikelwolke des Plasmastrahls bewegt wird.

15. Verfahren nach einem oder mehreren der vorhergehenden Ansprüche, **dadurch gekennzeichnet, dass** man ein Schichtsystem erzeugt, welches ausgehend vom Substrat folgende Schichten in der folgenden Reihenfolge umfasst:
- eine Sperrschicht;
- eine Heissgaskorrosionsschutzschicht aus einer MCrAlY-Legierung, wobei M für Fe, Co oder Ni steht, oder aus einem Metallaluminid;
- eine Schutzschicht auf oxidischer Basis zum Schutz der Heissgaskorrosionsschutzschicht;
- eine Wärmedämmschicht auf keramischer Basis; und
- eine Glättungsschicht zur Verbesserung der Erosionsfestigkeit.

16. Verfahren nach einem oder mehreren der Ansprüche 1 bis 15, in welchem das Schichtsystem auf einem metallischen Grundkörper aus einer Ni- oder Co-Legierung oder einer anderen hochtemperaturfesten metallischen Legierung erzeugt wird.

17. Verfahren nach einem oder mehreren der Ansprüche 1 bis 15, in welchem das des Schichtsystem auf einer Turbinenschaufel, insbesondere einer Leit- oder Laufschaufel einer stationären Gasturbine oder einer Flugturbine, erzeugt wird oder auf einer heissgasbeaufschlagbaren Komponente einer stationären Gasturbine oder einer Flugturbine, insbesondere einem Hitzeschild.

## Claims

1. A method for producing a heat insulating layer system on a metallic substrate, said layer system comprising at least three of the following individual layers:
- barrier layer;
- hot gas corrosion protection layer;
- protection layer;
- heat insulation layer; and
- smoothing layer;
**characterized in that** the layer system comprises a heat insulation layer and is applied by low pressure plasma spraying in the form of an LPPS coating process in a single work cycle.

2. A method in accordance with claim 1, **characterized in that** the layer system is applied in a single work cycle without interruption.

3. A method in accordance with claim 1 or claim 2, **characterized in that** the layer system is heat treated as a whole after application.

4. A method in accordance with one or more of the preceding claims, **characterized in that** a barrier layer with a layer thickness of 1 to 20 µm, preferably of 8 to 12 µm, is applied.

5. A method in accordance with one or more of the preceding claims, **characterized in that** a metallic barrier layer is applied, in particular composed of a metal alloy, preferably an NiAl alloy or an NiCr alloy.

6. A method in accordance with one or more of the preceding claims, **characterized in that** a hot gas corrosion protection layer with a layer thickness of 50 to 500 µm, preferably of 100 to 300 µm, is applied.

7. A method in accordance with one or more of the preceding claims, **characterized in that** a metallic hot gas corrosion protection layer is applied, in particular composed of an MCrAlY alloy, where M is Fe, Co or Ni, or composed of a metal aluminide.

8. A method in accordance with one or more of the preceding claims, **characterized in that** a protection layer with a layer thickness of 1 to 20 µm, preferably of 8 to 12 µm, is applied.

9. A method in accordance with one or more of the preceding claims, **characterized in that** a protection layer comprising an aluminum oxide or a ternary Al-Zr-O compound is applied.

10. A method in accordance with one or more of the preceding claims, **characterized in that** a heat insulation layer with a layer thickness of 100 to 2000 µm, preferably of 150 to 500 µm, is applied.

11. A method in accordance with one or more of the preceding claims, **characterized in that** a heat insulation layer is applied which comprises an oxide ceramic substance, in particular a substance comprising zirconium oxide, and a stabilizer, in particular composed of rare earth oxides, preferably yttrium oxide or cerium oxide.

12. A method in accordance with one or more of the preceding claims, **characterized in that** a smoothing layer with a layer thickness of 1 to 50 µm, preferably of 10 to 30 µm, is applied.

13. A method in accordance with one or more of the preceding claims, **characterized in that** a smoothing layer is applied which comprises an oxide ceramic substance, in particular a substance composed of zirconium oxide, and a stabilizer, in particular composed of rare earth oxides, preferably yttrium oxide or cerium oxide.

14. A method in accordance with one or more of the preceding claims, **characterized in that** the metallic substrate is moved in the particle cloud of the plasma jet by rotating movements or pivoting movements.

15. A method in accordance with one or more of the preceding claims, **characterized in that** a layer system is produced which comprises the layers in the following order, starting from the substrate:
- a barrier layer;
- a hot gas corrosion protection layer composed of an MCrAlY alloy, where M is Fe, Co or Ni, or of a metal aluminide
- a protection layer on an oxide base for the protection of the hot gas corrosion protection layer;
a heat insulation layer on a ceramic base; and
- a smoothing layer for improving the erosion resistance.

16. A method in accordance with one or more of the claims 1 to 15, in which the layer system is produced on a metallic base body composed of an Ni alloy or a Co alloy or of another metallic alloy resistant to high temperatures.

17. A method in accordance with one or more of the claims 1 to 15, in which the layer system is produced on a turbine blade, in particular a stator blade or a rotor blade of a stationary gas turbine or of an aircraft turbine, or on a component of a stationary gas turbine or of an aircraft turbine, in particular on a heat shield, acted on by hot gas.

## Revendications

1. Procédé de fabrication d'un système de couches calorifuge sur un substrat métallique, lequel système de couches comprend au moins trois des couches individuelles suivantes :
- couche barrière ;
- couche de protection contre la corrosion par les gaz chauds ;
- couche de protection ;
- couche calorifuge ; et
- couche de lissage,
**caractérisé en ce que** le système de couches comprend une couche calorifuge et est appliqué en un cycle de travail unique par pulvérisation plasma basse pression sous forme d'un procédé de revêtement LPPS.

2. Procédé selon la revendication 1, **caractérisé en ce que** le système de couches est appliqué sans interruption en un cycle de travail unique.

3. Procédé selon la revendication 1 ou 2, **caractérisé en ce que** le système de couches est, après son application, soumis à un traitement thermique dans son ensemble.

4. Procédé selon l'une ou plusieurs des revendications précédentes, **caractérisé en ce qu'**on applique une couche barrière ayant une épaisseur de couche de 1 à 20 µm, de préférence de 8 à 12 µm.

5. Procédé selon l'une ou plusieurs des revendications précédentes, **caractérisé en ce qu'**on applique une couche barrière métallique, en particulier en un alliage métallique, de préférence en un alliage NiAl ou NiCr.

6. Procédé selon l'une ou plusieurs des revendications précédentes, **caractérisé en ce qu'**on applique une couche de protection contre la corrosion par les gaz chauds, sur une épaisseur de couche de 50 à 500 µm, de préférence de 100 à 300 µm.

7. Procédé selon l'une ou plusieurs des revendications précédentes, **caractérisé en ce qu'**on applique une couche métallique de protection contre la corrosion par les gaz chauds, en particulier en un alliage MCrAlY, où M représente Fe, Co ou Ni, ou un aluminure métallique.

8. Procédé selon l'une ou plusieurs des revendications précédentes, **caractérisé en ce qu'**on applique une couche de protection ayant une épaisseur de couche de 1 à 20 µm, de préférence de 8 à 12 µm.

9. Procédé selon l'une ou plusieurs des revendications précédentes, **caractérisé en ce qu'**on applique une couche de protection qui est constituée d'un oxyde d'aluminium ou d'un composé ternaire Al-Zr-O.

10. Procédé selon l'une ou plusieurs des revendications précédentes, **caractérisé en ce qu'**on applique une couche calorifuge ayant une épaisseur de couche de 100 à 2000 µm, de préférence de 150 à 500 µm.

11. Procédé selon l'une ou plusieurs des revendications précédentes, **caractérisé en ce qu'**on applique une couche calorifuge qui est constituée d'une substance céramique à base d'oxydes, en particulier d'une substance contenant de l'oxyde de zirconium, et d'un stabilisant, en particulier d'oxydes des terres rares, en particulier d'oxyde d'yttrium ou d'oxyde de cérium.

12. Procédé selon l'une ou plusieurs des revendications précédentes, **caractérisé en ce qu'**on applique une couche de lissage ayant une épaisseur de couche de 1 à 50 µm, de préférence de 10 à 30 µm.

13. Procédé selon l'une ou plusieurs des revendications précédentes, **caractérisé en ce qu'**on applique une couche de lissage qui est constituée d'une substance céramique à base d'oxydes, en particulier d'une substance contenant de l'oxyde de zirconium, et d'un stabilisant, en particulier d'oxydes des terres rares, de préférence d'oxyde d'yttrium ou d'oxyde de cérium.

14. Procédé selon l'une ou plusieurs des revendications précédentes, **caractérisé en ce que** le substrat métallique est appliqué avec des mouvements de rotation ou de pivotement dans le nuage de particules du faisceau plasma.

15. Procédé selon l'une ou plusieurs des revendications précédentes, **caractérisé en ce qu'**on fabrique un système de couches qui comprend, en partant du substrat, les couches suivantes, dans l'ordre suivant :
- une couche barrière ;
- une couche de protection contre la corrosion par les gaz chauds, constituée d'un alliage MCrAlY, M représentant Fe, Co ou Ni, ou d'un aluminure métallique ;
- une couche de protection à base d'oxydes, pour protéger la couche de protection contre la corrosion par les gaz chauds ; et
- une couche calorifuge à base céramique ; et
- une couche de lissage, pour améliorer la résistance à l'érosion.

16. Procédé selon l'une ou plusieurs des revendications 1 à 15, dans lequel le système de couches est produit sur un corps de base métallique en un alliage de Ni ou de Co ou en un autre alliage métallique résistant aux hautes températures.

17. Procédé selon l'une ou plusieurs des revendications 1 à 15, dans lequel le système de couches est produit sur une aube de turbine, en particulier sur une aube directrice ou une aube mobile d'une turbine à gaz stationnaire ou d'une turbine d'avion, ou sur un composant, pouvant être sollicité par des gaz chauds, d'une turbine à gaz stationnaire ou d'une turbine d'avion, en particulier un bouclier thermique.
